# EUROPEAN PATENT APPLICATION

(11) **EP 1 897 767 A1**
(43) Date of publication of application: **12.03.2008**
(21) Application number: 06018559.2
(22) Date of filing: 05.09.2006
(51) Int. Cl.: B60R 25/10, G08B 25/10

(54) **Vehicle emergency system**

(71) Applicant: Harman Becker Automotive Systems GmbH, 76307 Karlsbad (DE)
(72) Inventor: Stiegler, Andreas, 76337 Waldbronn (DE); Oehring, Heiko, 76137 Karlsruhe (DE)
(74) Representative: Bertsch, Florian Oliver

(57) **Abstract**

The present invention relates to a vehicle emergency system comprising:
- an image sensor generating image data of the environment of the vehicle,
- a data transmission unit for wireless transmission of the image data to an emergency control center,
- an emergency control unit detecting an emergency request,

wherein the image sensor generates image data from the vehicle environment when the emergency control unit detects an emergency request, and the emergency control unit initiates the transmission of the image data to the emergency control center via the transmission unit.

## Description

This invention relates to a vehicle emergency system and to a method for initiating an emergency request in a vehicle.

### Related Art

Nowadays vehicles are often equipped with multi-media systems comprising a telecommunication unit for wireless communication via a telecommunication network. With the use of these communication systems the driver or any other person inside a vehicle is able to communicate via the telecommunication network to persons outside the vehicle. Additionally, it is known to use driver assistance systems in the vehicle, these systems including image sensors, the image data being used for adaptive cruise control, pre-crash control, passenger compartment surveillance and park assistance.

In the event of a vehicle accident it is important to inform emergency vehicles or fire vehicles very shortly after the accident. In the case of injured people time is a crucial factor and it is necessary to provide all the information needed to correctly react in the event of the accident. The analysis of vehicle crashs have shown that a large majority of people are not able to correctly identify the location of the accident in the event of an emergency. Even if the person initiating the emergency call is able to locate the accident, the other information such as the number of injured people and the severeness of the injury is hard to get, as the involved persons are often shocked.

### Summary

Accordingly, a need exists to provide a vehicle emergency system which helps to provide all information needed in the event of an emergency such as an accident.

This need is met by the features of the independent claims. In the dependent claims preferred embodiments of the invention are described.

According to a first aspect of the invention an emergency system for a vehicle is provided, the system comprising an image sensor generating image data of the environment of the vehicle. Additionally, a data transmission unit is provided for wireless transmission of the image data taken by the image sensor to an emergency control center outside the vehicle. Additionally, an emergency control unit is provided in the vehicle detecting an emergency request. When the emergency control unit in the vehicle detects an emergency request, the image sensor generates image data of the vehicle environment and the control unit initiates the transmission of the image data to the emergency control center outside the vehicle via the transmission unit that is transmitting the data to the emergency control center. With the emergency system of the invention the emergency control center which may be a centralized control center receiving all the emergency calls is able to determine which kind of aid is needed for the emergency. The images taken by the image sensor can form a basis for the correct reaction of the operators in the emergency control center. The images provide a first overview over the severity of the accident. The images may further show the number of vehicles involved in the accident or the image may show that it might be necessary to inform the fire department in addition to the ambulance. Nowadays many vehicles have image sensors such as cameras observing the front or the rear part of the vehicle for cruise control and parking assistance. Additionally, communication units are often provided in vehicles so that data can be transmitted from the vehicle to outside the vehicle. With these two components the vehicle emergency system according to the invention can be provided without the need of providing additional hardware. As soon as an emergency request is detected, image data from the vehicle environment can be generated and transmitted to the emergency control center.

When the image data are transmitted via a mobile telephony network it is possible to roughly determine the position of the data from where the data were transmitted. When the image data are received by several receiving units of the telephony network, the position of the emergency request can be calculated based on geometrical considerations. However, it is also possible that in the vehicle a position determination unit is provided determining the geographical position of the vehicle. When such a position determination unit is present in the vehicle, the exact position can be transmitted to the emergency control center together with the image data. When the vehicle is equipped with a navigation system guiding the user from the present vehicle location to a predetermined destination, a position determination unit is usually provided. These position determination units can comprise a receiver receiving radio data from satellites such as GPS or Galileo. Furthermore, the position can be determined based on vehicle sensor data comprising the wheel rotation and the position of the steering wheel. The position data help to correctly determine the location of the emergency.

According to a preferred embodiment of the invention the emergency system may comprise an emergency button with which the user can initiate the emergency request generating an emergency request signal. It may happen that a third person not involved in the accident is approaching the location of the accident. In this case the user can press the emergency button so that the images generated by the image sensor are transmitted to the emergency control center. Additionally, it is possible that the persons involved in the accident press the emergency button under the condition that they are able to do so.

In addition to the manual actuation of the emergency request it is possible to provide an emergency detecting sensor in the vehicle detecting the existence of an emergency, the sensor generating the emergency request signal transmitted to the emergency control unit. The emergency detecting sensor can receive signals from an airbag control system. When the airbag of a vehicle is activated due to an accident, at the same time a signal can be sent to the emergency detecting sensor generating the emergency request. Additionally, the emergency detection sensor may receive a signal from an acceleration sensor or from a belt pretensioning system. In this case there is no need for the active interaction of the user. This has the advantage that even when the driver or the other vehicle passengers are seriously injured and cannot activate the emergency button images are generated and transmitted to the emergency control center without the interaction of any of the vehicle passengers.

Furthermore, it is possible that the emergency system comprises a receiving unit so that a bidirectional connection between the emergency control center and the vehicle can be established. In this case the vehicle can receive data from the emergency control center such as control data for controlling the functioning of the image sensor. In this embodiment the operator of the emergency control center could even remotely control the image sensor and can, e.g., zoom in or out and perform a scan.

According to another aspect of the invention a method for initiating the emergency request in a vehicle is provided, the method comprising the step of detecting an emergency request in a vehicle. Additionally, image data are generated of the vehicle environment and the data are transmitted to the emergency control center via a wireless transmission system upon detection of an emergency request. Additionally, the position of the vehicle can be determined and transmitted together with the image data to the emergency control center.

As discussed above, an emergency request signal is generated initiating the emergency request. This emergency request signal can either be generated by pressing an emergency button in the vehicle or can be generated by other sensors in the vehicle such as the airbag sensor, belt pretensioning sensor, etc. It should be understood that both possibilities can be provided in the vehicle, the emergency button to be pressed by a passenger of the vehicle and the emergency request signal from other vehicle sensors.

Other objects, features and advantages of the invention will become apparent in the course of the following description referring to the accompanying drawings.

### Brief description of the drawings

Fig. 1 is a schematic view of a vehicle emergency system, and
Fig. 2 is a flowchart showing the steps for initiating an emergency request.

### Detailed description of the preferred embodiment

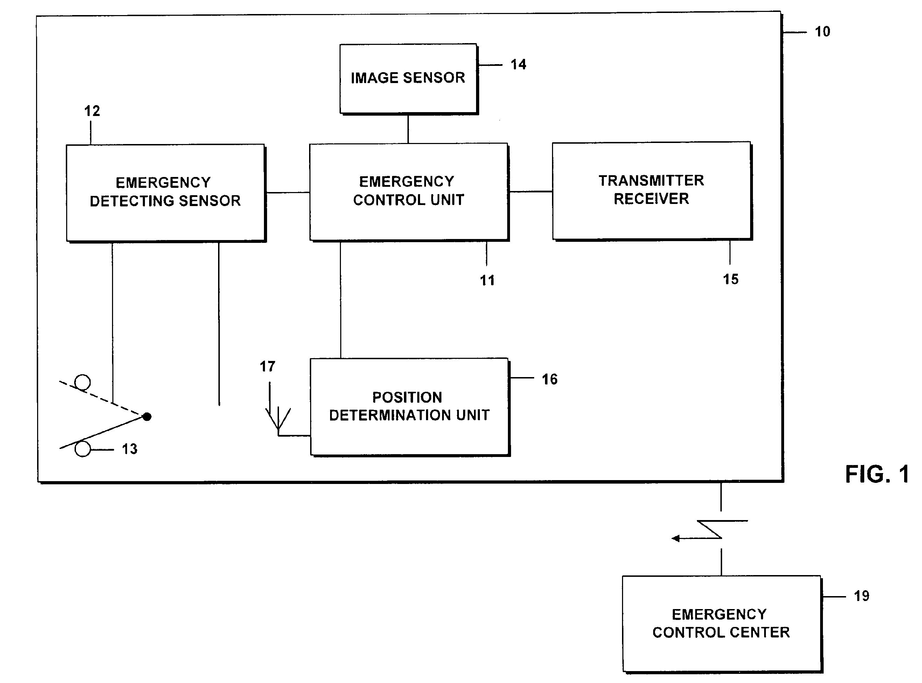

In Fig. 1 a vehicle emergency system of the invention is shown. The system in the vehicle (not shown) comprises an emergency control unit 11 receiving a signal from the emergency detecting sensor 12. The emergency detecting sensor generates the emergency request signal transmitted to the emergency control unit. The emergency request signal can be generated when a passenger of the vehicle presses a button 13. Additionally, the emergency detecting sensor 12 has another input receiving signals from other sensors of the vehicle such as an airbag sensor. The emergency detecting sensor generates the emergency request signal when a signal is received from one of the two inputs shown in Fig. 1. The emergency request signal is transmitted to the emergency control unit which controls an image sensor 14. The image sensor 14 can be a camera installed in a vehicle such as a CCD or CMOS camera usually used in vehicles. This camera can be installed behind the windshield for supervising the front of the vehicle. Additionally, it is possible that the image sensor is provided behind the radiator grill in the front part of the vehicle. Furthermore, the image sensor may be a sensor imaging the rear part of the vehicle. Moreover, it is possible to install an image sensor supervising the passenger compartment. It should be understood that the image sensor can be provided at different locations in the vehicle. In the event of an emergency the image sensor or the different image sensors provided in the vehicle can generate image data from the environment of the vehicle including the passenger compartment. It should be understood that in the present context the vehicle environment also comprises the passenger compartment. When an image of the passenger compartment is generated, it is possible to have an overview of the passengers inside the vehicle, whether they are injured or not. The image data generated by the image sensor can then be transmitted to a transmitter/receiver 15 transmitting the data to an emergency control center 19 provided outside the vehicle. The transmission of the data can be carried out by a mobile network. In mobile networks the transmission of emergency requests are normally possible without the provision of a subscriber identity module card (SIM cards). By way of example the image data could be transmitted as an MMS or SMS or e-mail including the attached image data.

The emergency control center may be a centralized emergency center handling all incoming emergency calls of a predetermined geographical region and deciding how many or which kind of emergency vehicles are activated.

Additionally, a position determination unit 16 can be provided in the emergency system. By way of example, the position determination unit may comprise a GPS antenna 17 receiving satellite signals with which the exact geographical position of the vehicle can be determined. If present, the position of the vehicle is transmitted together with the image data from the image sensor 14. In this case the emergency control center exactly knows the position of the emergency and also has a first overview of the severeness of the accident by evaluating the image data received from the vehicle. For the transmission of the image data to the emergency control center any wireless transmission method is possible, be it a mobile communication network using a transmission systems like GPRS or UMTS. Additionally, the transmission via WIFI is possible.

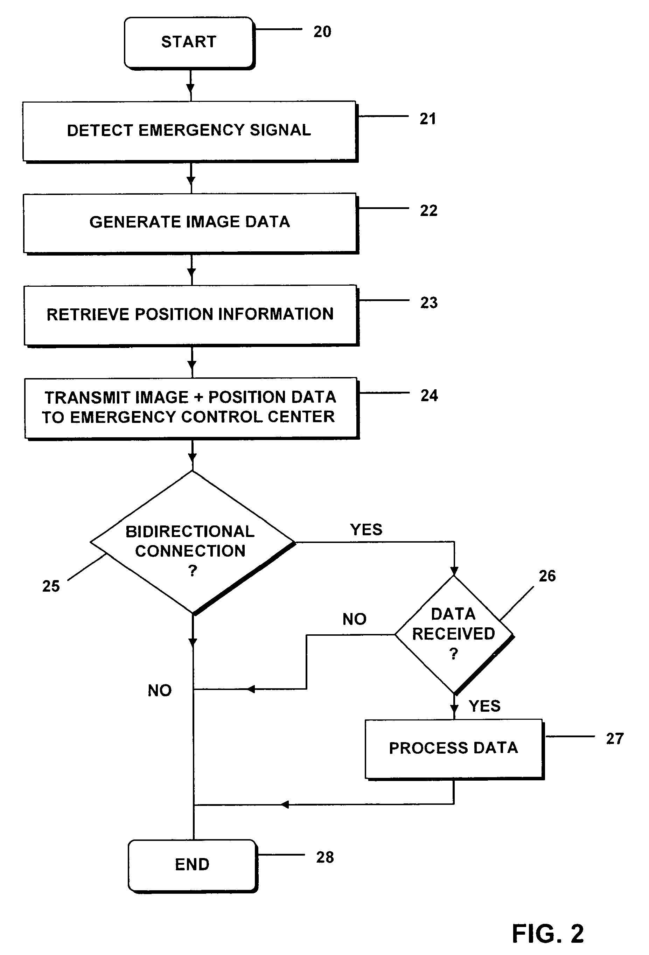

In Fig. 2 the steps for initiating an emergency call according to the invention are shown in more detail. The process starts in step 20. In step 21 the emergency signal is detected using the emergency detecting sensor 12. When an emergency signal is detected, an emergency request signal is transmitted to the emergency control unit, the emergency control unit controlling the image sensor in such a way that image data are generated in step 22. In addition to the generated image data a position information is retrieved in step 23. It should be understood that the position information needs not to be retrieved necessarily as it is also possible to detect the position of the vehicle when the image data are transmitted from the vehicle via the mobile network.

In step 24 the position data are transmitted to the emergency control center 19 together with the image data, where they are received and further processed. In step 25 it is asked whether a bidirectional connection is possible between the vehicle and the emergency control center. If this is the case, it is possible to ask in step 26 whether data are received from the emergency control center. The emergency control center may try to initiate a call to the persons inside the vehicle. Furthermore, it is possible that the emergency control center asks for additional information. Additionally, it may be possible that control data for controlling the image sensor are transmitted so that the emergency control center can be used for a remote control of the image sensor. The emergency control center can in this case try to gather additional information by taking additional images. In the control center it can be decided depending on the information given in the images how to react to the transmitted information of the accident. The emergency control center can by way of example determine whether a fire emergency vehicle is necessary or not. When data are transmitted from the control center to the vehicle in step 26, the data are processed in step 27. This processing can comprise the remote controlling of the image sensor. The process ends in step 28.

Summarizing, the invention provides a possibility to give the emergency control center a better overview over the severity of an accident. The emergency control center can then react and initiate the sending of a fire brigade and can determine how many emergency vehicles will be necessary to treat the involved persons.

## Claims

1. Vehicle emergency system comprising:
- an image sensor (14) generating image data of the environment of the vehicle,
- a data transmission unit (15) for wireless transmission of the image data to an emergency control center (19),
- an emergency control unit (11) detecting an emergency request,
wherein the image sensor generates image data from the vehicle environment when the emergency control unit (11) detects an emergency request, and the emergency control unit initiates the transmission of the image data to the emergency control center (19) via the transmission unit.

2. The vehicle emergency system according to claim 1, **characterized by** further comprising a position determination unit (17) determining the geographical position of the vehicle, the position of the vehicle being transmitted to the emergency control center together with the image data.

3. The vehicle emergency system according to claim 1 or 2, **characterized by** further comprising an emergency button (13) with which a user of the system can initiate the emergency request.

4. The vehicle emergency system according to any of the preceding claims, **characterized by** further comprising an emergency detecting sensor (12) detecting the existence of an emergency and generating an emergency request signal transmitted to the emergency control unit.

5. The vehicle emergency system according to any of the preceding claims, **characterized by** further comprising a receiving unit receiving data from the emergency control center, the received data comprising control data for controlling the functioning of the image sensor.

6. Method for initiating an emergency request in a vehicle, comprising the following steps:
- detecting an emergency request in the vehicle,
- generating image data of the vehicle environment,
- transmitting, upon detection of an emergency request, the generated image data to an emergency control center via a wireless transmission system.

7. The method according to claim 6, further comprising the step of determining the position of the vehicle and transmitting the position together with the image data to the emergency control center (19).

8. The method according to claim 6 or 7, wherein an emergency request signal is generated initiating the emergency request.

9. The method according to claim 8, wherein the emergency request signal is generated by pressing an emergency button (13) in the vehicle.

10. The method according to claim 8 or 9, wherein the emergency request signal is generated in accordance with signals received from vehicle sensors

11. The method according to claim 9, wherein the emergency signal is generated in accordance with a signal received from an airbag control unit.

12. The method according to any of claims 6 to 10, wherein, upon reception of an emergency information in the emergency control center, image sensor control data controlling the mode of operation of the image sensor are transmitted to the vehicle.

13. The method according to any of claims 6 to 11, wherein the image data are transmitted via a wireless communication network.

## Amended claims

### Amended claims in accordance with Rule 137(2) EPC.

**1.** Method for initiating an emergency request in a vehicle, comprising the following steps:
- detecting an emergency request in the vehicle,
- generating image data of the vehicle environment,
- transmitting, upon detection of an emergency request, the generated image data to an emergency control center via a mobile telephony network,
**characterized in that**
the position of the vehicle is determined and transmitted together with the image data to the emergency control center (19), when a position determination unit is provided in the vehicle, wherein in the other case the position of the emergency request is calculated based on geometrical considerations when the image data are transmitted via the mobile telephony network.

**2.** The method according to claim 1, wherein an emergency request signal is generated initiating the emergency request.

**3.** The method according to claim 2, wherein the emergency request signal is generated by pressing an emergency button (13) in the vehicle.

**4.** The method according to claim 2 or 3, wherein the emergency request signal is generated in accordance with signals received from vehicle sensors

**5.** The method according to claim 3, wherein the emergency signal is generated in accordance with a signal received from an airbag control unit.

**6.** The method according to any of claims 1 to 4, wherein, upon reception of an emergency information in the emergency control center, image sensor control data controlling the mode of operation of the image sensor are transmitted to the vehicle.
